# EUROPÄISCHE PATENTANMELDUNG

(11) **EP 2 638 953 A2**
(43) Veröffentlichungstag der Anmeldung: **18.09.2013**
(21) Anmeldenummer: 13450012.3
(22) Anmeldetag: 12.03.2013
(51) Int. Cl.: B01D 53/62

(54) **Verfahren zum Gewinnen von Kohlendioxid**

(30) Priorität: 12.03.2012 AT 2992012
(71) Anmelder: Knoch, Kern & Co., 9020 Klagenfurt (AT)
(72) Erfinder: Wesner, Wolfgang, 1050 Wien (AT)
(74) Vertreter: Beer & Partner Patentanwälte KG

(57) **Zusammenfassung**

Zum Entfernen von Kohlendioxid aus Verbrennungsabgasen wird das kohlendioxidhaltige Gas über ein poröses Trägermaterial geleitet, das mit einer Lösung von wenigstens einem Alkalikarbonat beladen worden ist, dass Kohlendioxid aus dem Gas durch Bilden von Alkalibikarbonat gebunden wird und dass Kohlendioxid aus dem Alkalibikarbonat durch Erhöhen der Temperatur wieder freigesetzt wird. Die zum Erwärmen des Kohlendioxids benötigte Wärme wird dem Verbrennungsabgas, aus dem das Kohlendioxid entfernt werden soll, mit Hilfe eines Wärmetauschers entzogen.

## Beschreibung

Die Erfindung betrifft ein Verfahren zum Gewinnen von Kohlendioxid aus Gasen, insbesondere aus Prozess- und Verbrennungsabgasen, dadurch gekennzeichnet, dass kohlendioxidhaltiges Gas über ein poröses Trägermaterial geleitet wird, das mit einer Lösung von wenigstens einem Alkalikarbonat beladen ist, dass Kohlendioxid aus dem Gas unter Bilden von chemischen Verbindungen aus Wasser Alkalikarbonaten und Kohlendioxid in verschiedenen Mengenverhältnissen, insbesondere Wegscheidersalze und Alkalibikarbonate gebunden wird, und dass Kohlendioxid durch thermisches Zersetzen der so erhaltenen Verbindungen, vorzugsweise in hoher Konzentration, wieder freigesetzt wird.

Kohlendioxid fällt in (Verbrennungs-)Abgasen in Konzentrationen von wenigen Prozent an. In bestimmten Prozessen, wie zum Beispiel beim Herstellen von Klinker oder beim Brennen von Kalk fällt Kohlendioxid in höheren Konzentrationen von etwa 20% an. Für ein wirtschaftliches Verwerten oder Lagern ist es aber erforderlich, Kohlendioxid hoch konzentriert zur Verfügung zu stellen. Konzentrationen von mehr als 99% sind bevorzugt.

Bekannt ist das Binden von Kohlendioxid an Alkalikarbonate, wie Natriumkarbonat, wobei sich Alkalihydrogenkarbonat, insbesondere Natriumhydrogenkarbonat(Natriumbikarbonat), oder andere Mischkarbonate (Wegscheidersalze) und deren Hydrate bilden. Bekannt ist weiters das Freisetzen von Kohlendioxid durch Zersetzen der Hydrogenkarbonate und Mischkarbonate durch Erhöhen der Temperatur über den Zersetzungspunkt unter Rückbilden des Alkalikarbonates. Dieses Prinzip ist für Natriumkarbonate und Kaliumkarbonate in Form von Wirbelschichtanwendungen der reinen Salze, oder auch von Salzen auf Trägermaterialien bekannt. Weiters ist die Anwendung von Lösungen dieser Salze zur Absorbtion von Kohlendioxid bekannt.

Die bekannten Verfahren arbeiten, jedoch nicht sehr energieoptimiert. Vor dem Hintergrund von umwelttechnischen Maßnahmen zur Reduktion des Kohlendioxidausstoßes, ist ein möglichst niedriger Energieverbrauch für die Anwendbarkeit und Akzeptanz eines derartigen Verfahrens entscheidend.

Verfahren zum Umwandeln von Ammonium- oder Alkalimetallkarbonaten in Bikarbonate sind bekannt.

So beschreibt die US 4,459,272 A ein Verfahren zum trockenen Umwandeln von Ammonium- oder Alkalimetallkarbonat in Bikarbonat, wobei in einer festen Phase ein Ammonium- und/oder Alkalimetallkarbonat mit flüssigem Wasser in einer kohlendioxidreichen Atmosphäre bei einer Temperatur von etwa 125°F (= 51,67°C) bis etwa 240°F (= 115,56°C) umgesetzt wird. Dabei soll die Reaktionstemperatur durch Verdampfen von flüssigem Wasser an der Reaktionsstelle und Entfernen des dabei gebildeteten Wasserdampfes aus der Reaktionsatmosphäre geregelt werden. Die US 4,664,893 A beschreibt das Umwandeln von Alkalimetall- oder Ammoniumkarbonat in bikarbonathältiges Absorbtionsmittel zum Entschwefeln von Gasen. Bei diesem Verfahren soll ein Kohlendioxid enthaltender Gasstrom mit Wasserdampf auf eine Feuchtigkeit von 90% gebracht werden, wobei feste Karbonatteilchen in einem fluidisierten Bett mit dem Gasstrom bei einer Temperatur von 100°F (= 37,78°C) bis 200°F (= 93,33°C) umgesetzt werden, so dass auf den Karbonatteilchen ein wässriger Film gebildet wird, wobei Kohlendioxid aus dem Gasstrom ungehindert auf die Oberfläche der Karbonatteilchen und Wärme von den Karbonatteilchen auf den Gasstrom übertreten können soll.

Die WO93/11070 A betrifft ein Verfahren um Trona (ein mineralisches Gemisch aus Natriumkarbonat/Natriumbikarbonat) zu behandeln, um Natriumbikarbonat zu bilden. Dabei soll mit einer Mischvorrichtung ein Rühren der Trona-Teilchen ausgeführt und ein Kohlendioxid enthaltender Gasstrom mit nur wenig Wasser umgesetzt werden. Der Kohlendioxid enthaltende Gasstrom wird durch einen Gaswäscher geleitet, wo er mit Wasser gesättigt wird und in die Mischvorrichtung zurückgeleitet wird. So soll eine neue Art von Natriumbikarbonat gebildet werden, das als Absorptionsmittel für das Entfernen von Schwefel aus Abgasen verwendet werden kann.

Im Stand der Technik wird das für die Reaktion Alkälikarbonat/Alkalibikarbonat benötigte Wasser bei Wirbelschichtreaktoren über die Luftfeuchte angeliefert. Da diese Wassermenge noch kein Optimum für die Reaktionsgeschwindigkeit darstellt, werden große Wirbelschichtreaktoren benötigt, die zum Aufrechterhalten der Wirbelschicht viel Energie benötigen. Höhere Wassergehalte, die z.B. durch das Einspritzen von Wasser in die Wirbelschicht erzielbar wären, führen zum Verklumpen der Karbonate und werden daher nicht verwirklicht.

Beim Einsatz von Karbonatlösungen wird Pumpenergie benötigt, um das Abgas in Wasser zu pumpen. Die Kapazität von Lösungen ist geringer als jene der Feststoffe und die Geschwindigkeit der Aufnahme ist bei weniger konzentrierten Lösungen besser als bei den gesättigten Lösungen, so dass noch größere Volumina an Absorptionsmittel benötigt werden. Je größer die Austauschoberfläche sein soll, desto mehr Pumpenergie wird benötigt. Die wirtschaftlichste Ausführung der Kohlendioxid-Fixierung mit Lösungen, ist das Versprühen der Lösung in einem Abgaswäscher (Venturiwäscher). Jedoch ist auch hier, neben der Pumpenergie für das Zerstäuben der Absorptionslösung im Wäscher das Freisetzen des Kohlendioxides Energie-intensiver als bei Verfahren, die feuchte Salze nutzen. Dies resultiert direkt aus der hohen Wärmekapazität von Wasser, das zur Freisetzung des Kohlendioxides mit erwärmt werden muss.

Aufgabe der Erfindung ist es, ein Energie-optimiertes Verfahren zum Entfernen von Kohlendioxid aus Gas, insbesondere zur Reinigung von Abgasströmen von Kohlendioxid, und zur nachfolgenden Freisetzung von konzentriertem Kohlendioxid bereit zu stellen.

Gelöst wird die Aufgabe erfindungsgemäß mit einem Verfahren gemäß Anspruch 1.

Vorteilhafte und bevorzugte Ausführungsformen des erfindungsgemäßen Verfahrens sind Gegenstand der Unteransprüche.

Die Erfindung stellt ein energiesparendes Verfahren zum Gewinnen von Kohlendioxid aus Gas, vornehmlich aus Abgasen zur Verfügung, wobei gleichzeitig eine Gas- bzw. Abgasreinigung im Sinne der Verringerung des Kohlendioxidgehaltes des Abgases erfolgt.

Mit der gegenständlichen Erfindung gelingt es weiters den Energieverbrauch insgesamt gering zu halten, da Energie, die für den Betrieb des Verfahrens benötigt wird, zum überwiegenden Teil aus Abwärme eines Industriebetriebes selbst gedeckt werden kann.

Bei dem erfindungsgemäßen Verfahren erlaubt das Wassermanagement bei der Be- und der Entladung ein Optimieren des Verfahrens. Da Natriumkarbonat mit Wasser und Kohlendioxid zu Natriumhydrogenkarbonat reagiert, ist bereits aus der Reaktionsgleichung der Wasserbedarf für die Reaktion ersichtlich.

2 NaHCO₃ (s) ⇄ Na₂ CO₃ (s) + CO₃ (g) + H₂O (g)

Die Reaktion ist reversibel, eine typische Ausführung umfasst das "Beladen" mit Kohlendioxid bei 80°C unter Bilden von Natriumbikarbonat. Ab 120°C erfolgt die Desorption (Kalzinierung) unter Rückbilden von Natriumkarbonat.

Versuche haben gezeigt, dass eine über das molare Verhältnis hinausgehende Wasserversorgung bei dem erfindungsgemäßen Verfahren zu einem schnelleren Umsetzen von Kohlendioxid führt.

In einer beispielhaften Ausführungsform des Verfahrens der Erfindung kann so vorgegangen werden, dass die für das thermische Zersetzen nötige Wärmemenge durch Zufuhr von erwärmten Kohlendioxid und/oder Wasserdampf zugeführt wird.

In einer beispielhaften Ausführungsform des Verfahrens der Erfindung kann so vorgegangen werden, dass die für das thermische Zersetzen benötigte Wärme, um Kohlendioxid und/oder Wasserdampf zu erwärmen, und/oder die benötigte Wärme zum Erzeugen von Wasserdampf aus Wasser, zumindest teilweise Verbrennungsabgasen entzogen wird und/oder aus Prozessabwärme und/oder aus regenerativen Energiequellen bereitgestellt wird.

In einer beispielhaften Ausführungsform des Verfahrens der Erfindung kann so vorgegangen werden, dass das thermische Zersetzen zum Freisetzen von Kohlendioxid, bei einem Druck erfolgt, der höher ist als der Dampfdruck von Wasser bei der jeweilig herrschenden Temperatur.

In einer beispielhaften Ausführungsform des Verfahrens der Erfindung kann so vorgegangen werden, dass Wasserdampf aus dem abzuziehenden Kohlendioxid vor dem Entspannen durch Abkühlen des Gasstromes kondensiert wird.

In einer beispielhaften Ausführungsform des Verfahrens der Erfindung kann so vorgegangen werden, dass durch Zugabe von nicht an der Bindung von CO₂ teilnehmenden Stoffen, insbesondere von leicht löslichen Salzen, der Siedepunkt des Wassers erhöht wird, sodass das Abdampfen des Wassers bei der Freisetzung des Kohlendioxids vermindert wird.

In einer beispielhaften Ausführungsform des Verfahrens der Erfindung kann so vorgegangen werden, dass als poröses Trägermaterial gebrannter Ton verwendet wird.

In einer beispielhaften Ausführungsform des Verfahrens der Erfindung kann so vorgegangen werden, dass gebrannter Ton mit einer Korngröße von 0,5 bis 100 mm, bevorzugt 2 bis 8 mm verwendet wird.

In einer beispielhaften Ausführungsform des Verfahrens der Erfindung kann so vorgegangen werden, dass gebrannter Ton mit einem Porenvolumen von 10 bis 90%, bevorzugt 40% bis 80% verwendet wird.

In einer beispielhaften Ausführungsform des Verfahrens der Erfindung kann so vorgegangen werden, dass poröser, gebrannter Ton dessen Poren überwiegend einen Porendurchmesser kleiner 100 µm, bevorzugt kleiner 10 µm aufweisen und dass Alkalikarbonatlösung in den Kapillaren und ein Erhöhen des Siedepunktes von in den Kapillaren befindlich Wasser erfolgt.

In einer beispielhaften Ausführungsform des Verfahrens der Erfindung kann so vorgegangen werden, dass das Gas durch einen Reaktor geleitet wird, der mit einer Schüttung von porösem Trägermaterial gefüllt ist.

In einer beispielhaften Ausführungsform des Verfahrens der Erfindung kann so vorgegangen werden, dass zum Entladen von Kohlendioxid durch das poröse Trägermaterial auf eine Temperatur von mehr als 100°C, bevorzugt mehr als 120°C, aufgeheiztes, feuchtes Kohlendioxid, geleitet wird.

In einer beispielhaften Ausführungsform des Verfahrens der Erfindung kann so vorgegangen werden, dass zum Entladen von Kohlendioxid Dampf in den Reaktor eingeleitet wird, dass der Dampf in Folge des endothermen Zersetzens der Alkalikarbonat-Kohlendioxidverbindungen abgekühlt und anschließend unter weiterer Wärmeabgabe kondensiert wird.

In einer beispielhaften Ausführungsform des Verfahrens der Erfindung kann so vorgegangen werden, dass die zum Erwärmen des Kohlendioxids benötigte Wärme teilweise oder vollständig Verbrennungsabgasen entzogen wird, aus denen das Kohlendioxid entfernt werden soll, oder aus Prozessabwärme eines vorgeschalteten Produktionsprozesses oder der gegebenenfalls nachgeschalteten Kohlendioxid verarbeitenden Prozesse gewonnen wird.

In einer beispielhaften Ausführungsform des Verfahrens der Erfindung kann so vorgegangen werden, dass der Dampf, der zum Freisetzen von Kohlendioxid benötigt wird, bei einer Temperatur und einem Druck, die kleiner sind als jene im Reaktor, wo die Zersetzung erfolgt, herrschen, aus Abwärme auf einem Temperaturniveau zwischen 60 und 120°C erzeugt wird, und dass der so gewonnene Dampf erst zum Einleiten in den Reaktor auf eine Temperatur über die Zersetzungstemperatur erhitzt wird.

In einer beispielhaften Ausführungsform des Verfahrens der Erfindung kann so vorgegangen werden, dass Verbrennungsabgasen und/oder Abwässern und/oder Prozessmedien Wärme mit Hilfe eines Wärmetauschers entzogen wird.

In einer beispielhaften Ausführungsform des Verfahrens der Erfindung kann so vorgegangen werden, dass Verbrennungsabgasen Wärme entzogen wird, bevor die Abgase durch das poröse Trägermaterial, insbesondere den Reaktor, geleitet werden.

In einer beispielhaften Ausführungsform des Verfahrens der Erfindung kann so vorgegangen werden, dass wenigstens ein Alkalikarbonat auf einem porösen Trägermaterial in Form einer konzentrierten bis übersättigten Lösung, gegebenenfalls wenigstens teilweise auskristallisiert, vorliegt.

In einer beispielhaften Ausführungsform des Verfahrens der Erfindung kann so vorgegangen werden, dass der poröse Träger mit einer Lösung wenigstens eines Alkalikarbonates beladen wird, indem der poröse Träger mit der Lösung berieselt wird.

In einer beispielhaften Ausführungsform des Verfahrens der Erfindung kann so vorgegangen werden, dass durch das poröse Trägermaterial wasserdampfuntersättigte Luft oder anderes untersättigtes Gas geleitet wird, während das poröse Trägermaterial mit der Lösung des wenigstens einen Alkalikarbonates berieselt wird.

In einer beispielhaften Ausführungsform des Verfahrens der Erfindung kann so vorgegangen werden, dass zur Regeneration wenigstens ein Teil des Trägermaterials, mit einem Waschmittel, bevorzugt Wasser oder wässrige Lösungen, gewaschen wird und dieses Trägermaterial im Anschluss wieder mit Alkalikarbonat beladen wird.

In einer beispielhaften Ausführungsform des Verfahrens der Erfindung kann so vorgegangen werden, dass wenigstens ein Teil des Trägermaterials durch Waschen mit gesättigten Lösungen der auf das Trägermaterial aufgebrachten Salze regeneriert wird, um Staub, anhaftende Verunreinigungen und unerwünschte Reaktionsprodukte, wie Alkalisulfate, zu entfernen.

In einer beispielhaften Ausführungsform des Verfahrens der Erfindung kann so vorgegangen werden, dass eine Regeneration der Lösung der ausgewaschenem Alkalicarbonate durch Filtration und/oder lonenaustausch und/oder Fällung erfolgt und die Lösung oder die Salze dieser Lösung von durch das kohlendioxidhaltige Abgas zugeführten Verunreinigungen gereinigt wird.

In einer beispielhaften Ausführungsform des Verfahrens der Erfindung kann so vorgegangen werden, dass das Trägermaterial in Form einer Schüttung vorliegt, die in einzelne parallel oder in Serie geschalteten Bereiche unterteilt ist, dass diese Bereiche unabhängig voneinander mit Waschlösung berieselt werden und dass das Trägermaterial, gegebenenfalls im laufenden Betrieb, in den einzelnen Bereichen unabhängig von anderen Bereichen gewaschen und beladen werden kann.

In einer beispielhaften Ausführungsform des Verfahrens der Erfindung kann so vorgegangen werden, dass die Schüttung von Trägermaterial durch Transportmittel, wie z.B. Förderbänder, Schnecken oder Rüttelsysteme, vom Gasaustritt zum Gaseintritt des die Schüttung beinhaltenden Reaktors bewegt wird, dass an der Gasaustrittsseite frisches oder regeneriertes Trägermaterial zugegeben wird und dass an der Gaseintrittsseite das austretende Trägermaterial entfernt wird.

Beispielsweise kann beim Ausführen des erfindungsgemäßen Verfahrens wie nachstehend beschrieben vorgegangen werden.

Ein poröses Material, vorzugsweise aus gebranntem Ton, mit einer bevorzugten Korngröße zwischen 2 und 8mm, wird in einen Reaktor eingebracht. Das poröse Tonmaterial weist vorzugsweise 40 bis 80% Porenvolumen und einem Porendurchmesser von 5 bis 60µm auf.

Der Reaktor kann je nach Abgasmenge und Raumangebot in beliebigen Formen ausgeführt werden. Vorteilhaft ist eine Schütthöhe im Inneren, die mindestens 50 cm beträgt. Nach oben hin wird die Schütthöhe nur durch die Stabilität des porösen Materials begrenzt, durch Zwischenböden kann jedoch auch diese Begrenzung überwunden werden.

Beladen des porösen Trägermaterials mit Alkalikarbonat:
Das poröse Material wird mit einer gesättigten wässrigen Lösung eines Alkalikarbonates oder einer Mischung von Alkalikarbonaten (insbesondere Natrium- und/oder Kaliumkarbonat) berieselt,
während von unten her Luft oder trockenes Gas durchgeblasen wird. Dadurch entsteht eine übersättigte Lösung, die in den Kapillaren des Trägermaterials teilweise auskristallisiert.

Beladen des Alkalikarbonates am Trägermaterial mit Kohlendioxid:
Das Gas, insbesondere Verbrennungsgas, wird (vorzugsweise bei Atmosphärendruck oder nur leicht erhöhtem Druck, übliche Widerstände der Schüttung betragen nur wenige mbar pro Meter) durch die Schüttung des Trägermaterials geblasen, (egal ob von unten nach oben, umgekehrt oder
horizontal), wobei in Abhängigkeit von der Durchströmungsgeschwindigkeit und der Länge der durchströmten Schüttung, eine nahezu vollständige Aufnahme des Kohlendioxides aus dem zu reinigenden Gas erfolgt.

Entladen des Alkalikarbonates:
Das Entladen des Alkalikarbonates erfolgt erfindungsgemäß, indem vorgeheiztes Kohlendioxid (T> 100°C bevorzugt 120 bis 140°C) im Kreislauf durch die Schüttung des Trägermaterials geführt wird, wobei das Kohlendioxid außerhalb der Schüttung in einem Wärmetauscher, erwärmt wird.

Die Wärme auf der Primärseite des Wärmetauschers wird vorzugsweise dem Verbrennungsabgas vor der Kohlendioxidentfernung entzogen. Der gesamte Kreislauf bleibt bevorzugt geschlossen, bis sich durch das Zersetzen von Natriumkarbonat ein Druck aufbaut, der höher als der Wasserdampfdruck bei der entsprechenden Temperatur ist (z.B. 1,3atü bei 120°C). Durch ein Überdruckventil wird mit Wasserdampf gesättigtes Kohlendioxid abgelassen. Nach Abkühlen des Produktgases und Kondensation des Wassers steht hoch konzentriertes Kohlendioxid für die weitere Verwertung zur Verfügung.

Entscheidend für die vorteilhafte Energiebilanz einer bevorzugten Ausführungsform des erfindungsgemäßen Verfahrens ist, dass kein zusätzlicher Wasserdampf entweicht und das mit Alkalikarbonat gesättige Wasser und auch ungelöstes Karbonat in den Poren des Trägermaterials verbleibt. Dadurch wird nicht nur Wasser, sondern vor allem die Wärmemenge, die für das Verdunsten von Wasser aufzüwenden wäre, gespart. Wasserverlust in Folge des Ablassens von gesättigtem Kohlendioxid kann durch Zugabe von kondensierten Wasser am Reaktorkopf ausgeglichen werden.

Alternativ zum Einbringen von Wärme über erwärmtes Kohlendioxid, kann das Freisetzen von Kohlendioxid auch durch Einblasen von überhitztem Dampf erfolgen, der in der Schüttung unter Abgabe der Kondensationswärme kondensiert. Das Kondensat ersetzt in dieser Variante des erfindungsgemäßen Verfahrens den Wasserverlust als Folge des Ablassens von feuchten Kohlendioxides. Zusätzlich bewirkt eingebrachter Dampf einen zur Reinigung des Absorptionsmittels vorteilhaften Wasserüberschuss. Wasser und Alkalikarbonatlösung, die bis zum Boden des Reaktors abtropft, kann nach einer verfahrensgemäßen Reinigung der Lösung wieder von oben in den Reaktor aufgebracht werden.

Reinigung des Absorptionsmittels und des Trägermaterials:
Da Abgas (Verbrennungsabgas) nicht nur reines Kohlendioxid und Stickstoff enthält, sondern unter Anderem auch Stäube und Schwefelverbindungen enthält, die mit der Zeit die Leistung des Absorptionsverfahrens verringern würden, ist in einer Ausführungsform des Verfahrens erfindungsgemäß vorgesehen, dass die Schüttung regelmäßig mit einer konzentrierten Alkalikarbonatlösung berieselt wird. Diese Lösung wird über eine Reinigung im Kreislauf gepumpt,
und nur die Verluste in Folge der Reinigung werden ersetzt. Stäube werden über mechanische Filter entfernt. Alkalisulfate weisen eine geringere Löslichkeit als die Alkalikarbonate und
Hydrogenkarbonate auf, wodurch sie in der gesättigten Alkalikarbonatlösung ausfallen und
abfiltriert werden können. Sammeln sich nach längerer Betriebszeit in den Kapillaren des Trägermaterials größere Mengen an Sulfaten an, so kann dieses mit Wasser ausgewaschen werden. Ein Ersatz des Trägermaterials ist daher über viele Jahre Betriebszeit nicht erforderlich.

Abrieb des Trägermaterials kann durch das Aufbereiten der Lösung ebenfalls entsorgt werden. Der Verlust an Trägermaterial durch Abrieb kann regelmäßig ergänzt werden, um die ursprüngliche Kapazität der Anlage zu erhalten.

Das regelmäßige Reinigen der Schüttung durch die oben beschriebenen Einrichtungen ist vorteilhaft, um die Durchlässigkeit der Schüttung auch bei gröberem Staubeintrag zu erhalten und Verschlammungen vorzubeugen. Muss bei herkömmlichen Verfahren das gesamte für die Bindung benötigte Wasser beim Freisetzen von Kohlendioxid wieder verdampft werden, so kommt das erfindungsgemäße Verfahren mit einer vergleichsweise geringen Wärmemenge aus.

Externe Pumpen und Gebläse zum Druckaufbau, die mit elektrischer Energie betrieben werden müssten, sind nicht nötig.

Das angereicherte Kohlendioxid steht bereits mit einem Vordruck von ca. 1 bar zur Verfügung.

Das Verwenden eines Überschusses an Wasser bei gleichzeitig großer Kontaktfläche zwischen Gasphase und flüssiger Phase ermöglicht eine besonders effektive Bindung des Kohlendioxides und reduziert somit die Anlagenkosten.

Auch die Tatsache dass nur geringe Drücke aufgebaut werden müssen, ist ein Vorteil des erfindungsgemäßen Verfahrens.

Um einen kontinuierlichen Betrieb zu gewährleisten können, mindestens zwei Reaktoren mit der Schüttung des porösen Materials vorgesehen sein, die abwechselnd be- und entladen werden.

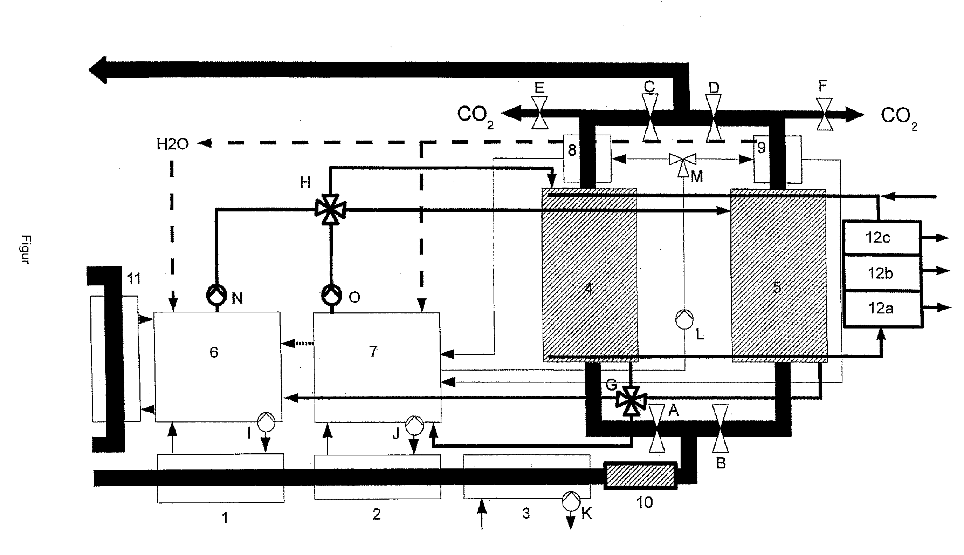

In der Zeichnung ist ein Beispiel für eine Anlage, in der das erfindungsgemäße Verfahren ausgeführt werden kann, schematisch dargestellt.

Einem warmen, kohlendioxidhaltigen Abgasstrom wird im ersten Wärmetauscher 1 auf einem hohen Temperaturniveau Wärme entzogen. Mit dieser Wärme wird im Behälter 6 Dampf erzeugt oder Dampf, der im Behälter 7 auf einem niedrigeren Temperaturniveau erzeugt wurde erhitzt, oder es wird feuchtes Kohlendioxid, das im Kreislauf die Schüttung zur Desorption erhitzt, erhitzt. Steht aus dem Abgas keine ausreichende Wärmemenge zur Verfügung, so kann über einen weiteren Wärmetauscher 11 Prozessabwärme oder einfach Wärme (vorzugsweise aus regenerativen Quellen) zur Verfügung gestellt werden.

Dem bereits abgekühlten Abgas wird in einem zweiten Wärmetauscher 2 weitere Wärme auf einem niedrigeren Temperaturniveau entzogen. Diese Wärme wird im Behälter 7 zum Erzeugen von Dampf oder zum Erwärmen von Dampf/Kohlendioxid zum Vorwärmen der Schüttung nach dem Umschalten von Absorption auf Desorption genutzt. Über das Kühlwasser der Kondensatoren 8 und 9 kann dem Behälter 7 auch die Kondensationswärme des Wassers aus dem Produktgasstrom wieder zugeführt werden.

Der dritte Wärmetauscher 3 kühlt das Abgas auf die Absorptionstemperatur, bevorzugt 80°C ab. Diese Abwärme kann noch zum Vorwärmen von Wasser oder einzuspeisenden Lösungen genutzt werden.

Der Abgasstrom wird anschließend durch eine optionale Vorreinigung 10 geleitet, die aus einer Schüttung von Alkalibikarbonaten besteht. Diese Schüttung wird nicht regeneriert sondern intervallweise oder kontinuierlich ersetzt. Hier binden Schwefeloxide und andere Verunreinigungen, mechanisch fängt sich Staub.

Danach wird das Abgas über die Ventile A oder B in einen der Absorptionsreaktoren 4 oder 5 geleitet, während der andere desorbiert wird. Im Kolonnenkopf oder danach sind Kondensatoren 8 und 9 angebracht, die Wasser aus dem Produktstrom bei der Desorption auskondensieren. Während der Absorption haben die Kondensatoren 8 und 9 keine Funktion.

Danach wird der gereinigte Abgasstrom über die Ventile C bzw. D freigesetzt. Über die Ventile E bzw. F wird das Produktgas bei der Desorption abgelassen. Das Ablassen erfolgt erfindungsgemäß bei einem Druck, der über dem Siedepunkt des Wassers bei der entsprechenden Reaktortemperatur ist. Die Ventile E und F haben daher eine entsprechende Druckregelung, die den Weg für das Kohlendioxid erst frei gibt, wenn der Druck durch die Zersetzung der Alkalibikarbonate überschritten wird. Würde die Freisetzung bei geringeren Drücken und niedrigeren Temperaturen erfolgen so würde der Wärmebedarf in Folge der großen Wassermengen welche abdampfen stark ansteigen, was weniger vorteilhaft ist.

Die Anlagenteile 12a bis 12c dienen zum Aufbereiten der Lösung der Alkalibikarbonate. Über Filtervorrichtungen und Abscheider werden Staub, Abrieb und ausgefallene Salze entfernt, der hierbei entstehende Verlust an Lösung oder Alkalikarbonaten wird im Anschluss an die Reinigung durch Zugabe wieder ausgeglichen.

Optional sind Zirkulationspumpen I, J, K, L, N, O vorgesehen, die sich bei optimierter Anlagenplanung einsparen lassen. Die Energie zum Druckaufbau bei der Desorption wird erfindungsgemäß durch Wärme bereitgestellt, durch Verdampfen von Wasser und der Zersetzung der Alkalibikarbonate resultiert ein ausreichender Druckaufbau, so dass keine Verdichter oder Kompressoren erforderlich sind.

Zusammenfassend kann ein Ausführungsbeispiel der Erfindung wie folgt beschrieben werden:
Zum Entfernen von Kohlendioxid aus Verbrennungsabgasen wird das kohlendioxidhaltige Gas über ein poröses Trägermaterial geleitet, das mit einer Lösung von wenigstens einem Alkalikarbonat beladen worden ist, dass Kohlendioxid aus dem Gas durch Bilden von Alkalibikarbonat gebunden wird und dass Kohlendioxid aus dem Alkalibikarbonat durch Erhöhen der Temperatur wieder freigesetzt wird. Die zum Erwärmen des Kohlendioxids benötigte Wärme wird dem Verbrennungsabgas, aus dem das Kohlendioxid entfernt werden soll, mit Hilfe eines Wärmetauschers entzogen.

### Bezugszeichenliste

| | |
|---|---|
| 1 | Erster Wärmetauscher zur Wärmegewinnung aus dem Abgas |
| 2 | Zweiter Wärmetauscher zur Wärmegewinnung aus dem Abgas |
| 3 | Dritter Wärmetauscher zur Kühlung des Abgases |
| 4 | Erster Absorptionsbehälter gefüllt mit einer Schüttung aus porösem Trägermaterial, beladen mit Alkalikarbonat |
| 5 | Zweiter Absorptionsbehälter gefüllt mit einer Schüttung aus porösem Trägermaterial, beladen mit Alkalikarbonat |
| 6 | Verdampfer und/oder Vorratstank für Dampf oder Dampf/Kohlendioxid zur Wärmeinbringung für die Freisetzung des gebundenen Kohlendioxides |
| 7 | Vorratstank für Kohlendioxid und/oder Dampf zum Vorwärmen der Schüttung nach der Beladung |
| 8 | Erster Kondensator zur Kondensation des Wassers im Produktgasstrom |
| 9 | Zweiter Kondensator zur Kondensation des Wassers im Produktgasstrom |
| 10 | Abgasvorreinigung, austauschbare Schüttung eines Hydrogenkarbonates zur mechanischen Filterung und zur Bindung von Schwefeloxiden in Form ihrer Alkalisalze. |
| 11 | Wärmetauscher zur Bereitstellung von Prozessabwärme und oder zusätzlicher Wärme, bevorzugt aus regenerativen Energiequellen. |
| 12a,b,c | Aufbereitung der Alkalikarbonatlösung, Entfernung von Staub, Abrieb, schwer löslichen Salzen durch verschiedene Filtrationsmethoden. |
| A, B, C, D | Ventile zur Umlenkung des Abgastromes zur realisierung eines Batchbetriebes der Reaktoren. |
| E, F | Druckventile welche den Abzug des Kohlendioxides bei der Entladung ermöglichen. |
| G, H | Ventile zur Wärmeeinbringung für die Desorption, Regelung des Kohlendioxid und/oder Dampfstromes. |
| M | Ventil zur Rückgewinnung der Kondensationswärme. |
| I, J, K, L, N, O | Zirkulationspumpen optional |

## Patentansprüche

1. Verfahren zum Gewinnen von Kohlendioxid aus Gasen, insbesondere aus Prozess- und Verbrennungsabgasen, **dadurch gekennzeichnet, dass** kohlendioxidhaltiges Gas über ein poröses Trägermaterial geleitet wird, das mit einer Lösung von wenigstens einem Alkalikarbonat beladen ist, dass Kohlendioxid aus dem Gas unter Bilden von chemischen Verbindungen aus Wasser Alkalikarbonaten und Kohlendioxid, insbesondere als Wegscheidersalze und Alkalibikarbonate, gebunden wird, und dass Kohlendioxid durch thermisches Zersetzen der so erhaltenen Verbindungen, vorzugsweise in hoher Konzentration, wieder freigesetzt wird.

2. Verfahren nach Anspruch 1, **dadurch gekennzeichnet, dass** das thermische Zersetzen zum Freisetzen von Kohlendioxid, bei einem Druck erfolgt, der höher ist als der Dampfdruck von Wasser bei der jeweilig herrschenden Temperatur.

3. Verfahren nach Anspruch 1 oder 2, **dadurch gekennzeichnet, dass** durch Zugabe von nicht an der Bindung von CO₂ teilnehmenden Stoffen, insbesondere von leicht löslichen Salzen, der Siedepunkt des Wassers erhöht wird, sodass das Abdampfen des Wassers bei der Freisetzung des Kohlendioxids vermindert wird.

4. Verfahren nach einem der Ansprüche 1 bis 3, **dadurch gekennzeichnet, dass** das Gas durch einen Reaktor geleitet wird, der mit einer Schüttung von porösem Trägermaterial gefüllt ist.

5. Verfahren nach einem der Ansprüche 1 bis 4, **dadurch gekennzeichnet, dass** zum Entladen von Kohlendioxid Dampf in den Reaktor eingeleitet wird, dass der Dampf in Folge des endothermen Zersetzens der Alkalikarbonat-Kohlendioxidverbindungen abgekühlt und anschließend unter weiterer Wärmeabgabe kondensiert wird.

6. Verfahren nach einem der Ansprüche 1 bis 5, **dadurch gekennzeichnet, dass** Verbrennungsabgasen und/oder Abwässern und/oder Prozessmedien Wärme mit Hilfe eines Wärmetauschers entzogen wird.

7. Verfahren nach einem der Ansprüche 1 bis 6, **dadurch gekennzeichnet, dass** Verbrennungsabgasen Wärme entzogen wird, bevor die Abgase durch das poröse Trägermaterial, insbesondere den Reaktor, geleitet werden.

8. Verfahren nach einem der Ansprüche 1 bis 7 **dadurch gekennzeichnet, dass** wenigstens ein Alkalikarbonat auf einem porösen Trägermaterial in Form einer konzentrierten bis übersättigten Lösung, gegebenenfalls wenigstens teilweise auskristallisiert, vorliegt.

9. Verfahren nach einem der Ansprüche 1 bis 8 **dadurch gekennzeichnet, dass** der poröse Träger mit einer Lösung wenigstens eines Alkalikarbonates beladen wird, indem der poröse Träger mit der Lösung berieselt wird.

10. Verfahren nach Anspruch 9 **dadurch gekennzeichnet, dass** durch das poröse Trägermaterial wasserdampfuntersättigte Luft oder anderes untersättigtes Gas geleitet wird, während das poröse Trägermaterial mit der Lösung des wenigstens einen Alkalikarbonates berieselt wird.

11. Verfahren nach einem der Ansprüche 1 bis 10, **dadurch gekennzeichnet, dass** zur Regeneration wenigstens ein Teil des Trägermaterials, mit einem Waschmittel, bevorzugt Wasser oder wässrige Lösungen, gewaschen wird und dieses Trägermaterial im Anschluss wieder mit Alkalikarbonat beladen wird.

12. Verfahren nach den Ansprüchen 1 bis 10 **dadurch gekennzeichnet, dass** wenigstens ein Teil des Trägermaterials durch Waschen mit gesättigten Lösungen der auf das Trägermaterial aufgebrachten Salze regeneriert wird, um Staub, anhaftende Verunreinigungen und unerwünschte Reaktionsprodukte, wie Alkälisulfate, zu entfernen.

13. Verfahren nach Anspruch 11 oder 12 **dadurch gekennzeichnet, dass** eine Regeneration der Lösung der ausgewaschenem Alkalicarbonate durch Filtration und/oder lonenaustausch und/oder Fällung erfolgt und die Lösung oder die Salze dieser Lösung von durch das kohlendioxidhaltige Abgas zugeführten Verunreinigungen gereinigt wird.

14. Verfahren nach einem der Ansprüche 1 bis 13, **dadurch gekennzeichnet, dass** das Trägermaterial in Form einer Schüttung vorliegt, die in einzelne parallel oder in Serie geschalteten Bereiche unterteilt ist, dass diese Bereiche unabhängig voneinander mit Waschlösung berieselt werden und dass das Trägermaterial, gegebenenfalls im laufenden Betrieb, in den einzelnen Bereichen unabhängig von anderen Bereichen gewaschen und beladen werden kann.

15. Verfahren nach einem der Ansprüche 1 bis 14 **dadurch gekennzeichnet, dass** die Schüttung von Trägermaterial durch Transportmittel, wie z.B. Förderbänder, Schnecken oder Rüttelsysteme, vom Gasaustritt zum Gaseintritt des die Schüttung beinhaltenden Reaktors bewegt wird, dass an der Gasaustrittsseite frisches oder regeneriertes Trägermaterial zugegeben wird und dass an der Gaseintrittsseite das austretende Trägermaterial entfernt wird.
